# EUROPEAN PATENT APPLICATION

(11) **EP 2 317 688 A2**
(43) Date of publication of application: **04.05.2011**
(21) Application number: 11155762.5
(22) Date of filing: 23.11.2005
(51) Int. Cl.: H04L 7/04, H04J 3/12, H04L 7/10, H04L 1/00, H04L 5/00

(54) **System and methods for implementing cyclic redundancy checks**

(30) Priority: 24.11.2004 US 630853 P; 02.12.2004 US 632825 P
(62) Divisional of application: 05852047.9
(71) Applicant: QUALCOMM Incorporated, San Diego, CA 92121-1714 (US)
(72) Inventor: Steele, Brian, San Diego, CA 92121-1714 (US); Wiley, George, San Diego, CA 92121-1714 (US)
(74) Representative: Bardehle, Heinz

(57) **Abstract**

A cycle redundancy check, CRC, generator system (454) within a host system as well as a corresponding method is described. The system/method provides a mechanism to intentionally corrupt a CRC value. Thereby, the system (454) comprises a CRC generator (910) that generates a CRC value based on data to be included in a data packet to be transmitted over a digital transmission link, a CRC corrupter (920) that corrupts a CRC value generated by the CRC generator to convey host or related system status information, an error detector (930) that detects an error condition within a host system and provides instructions for the CRC corrupter to intentionally corrupt a CRC value. Also a corresponding CRC checker and method are described that can interpret intentionally corrupted CRC values.

## Description

### BACKGROUND OF THE INVENTION

### Field of the Invention

The present invention relates generally to data communications. More particularly, the invention relates to digital transmission links using cyclic redundancy checks.

### Background

Computers, mobile telephones, mobile telephone cameras and video capture devices, personal data assistants, electronic game related products and various video technologies (e.g., DVD's and high definition VCRs) have advanced significantly over the last few years to provide for capture and presentation of increasingly higher resolution still, video, video-on-demand, and graphics images. Combining such visual images with high quality audio data, such as CD type sound reproduction, DVDs, and other devices having associated audio signal outputs, creates a more realistic, content rich, or true multimedia experience for an end user. In addition, highly mobile, high quality sound systems and music transport mechanisms, such as MP3 players, have been developed for audio only presentations to users.

The explosion of high quality data presentation drove the need to establish specialized interfaces that could transfer data at high data rates, such that data quality was not degraded or impaired. One such interface is a Mobile Display Digital Interface (MDDI), used, for example, to exchange high speed data between the lower and upper clamshells of a cellular telephone that has a camera. MDDI is a cost-effective, low power consumption, transfer mechanism that enables very-high-speed data transfer over a short-range communication link between a host and a client. MDDI requires a minimum of just four wires plus power for bi-directional data transfer that with present technology can deliver a maximum bandwidth of up to 3.2 Gbits per second.

While MDDI and other data interfaces can be used to efficiently provide high speed data rates across interfaces, there are increasing needs to optimize performance and more effectively use digital transmission links, such as an MDDI link.

### SUMMARY OF THE INVENTION

The present invention provides systems and methods for implementing cyclic redundancy checks (CRCs) to improve link initialization processing and to exchange system error information, such that digital transmission links can be used more effectively. In one aspect of the invention, a CRC checker is provided that includes a unique pattern detector, a CRC generator, a CRC initializer and a CRC verifier. The CRC checker prepopulates the CRC generator for a unique pattern. Because the CRC generator is prepopulated, upon receipt of the unique pattern within a data stream received over a digital transmission link, the CRC checker can proceed to check CRCs without the need to queue and store data.

In another aspect of the invention, a CRC generator system is provided that intentionally corrupts CRC values to transmit system or related system error information. The CRC generator system includes a CRC generator, a CRC corrupter, an error detector and an error value generator. The CRC generator generates a CRC value based on data to be included in a data packet to be transmitted over a digital transmission link. The CRC corrupter corrupts the CRC value generated by the CRC generator to convey host or related system status information. The error detector detects an error condition within a host or related system and provides instructions for the CRC corrupter to intentionally corrupt a CRC value.

In a further aspect of the invention, the CRC generator system can provide specific information as to the type of error that is included. In this case, in addition to the above elements, the CRC generator system includes an error value generator that instructs the CRC corrupter to replace a CRC value generated by the CRC generator with a specific CRC error value that indicates a type of system error or status condition.

In one example, the digital transmission link is an MDDI link. The present invention is not limited to MDDI links, and can be used with any type of digital transmission link in which CRCs are used.

Further embodiments, features, and advantages of the invention, as well as the structure and operation of the various embodiments of the invention are described in detail below with reference to the accompanying drawings.

### BRIEF DESCRIPTION OF THE FIGURES

The invention is described with reference to the accompanying drawings. In the drawings, like reference numbers indicate identical or functionally similar elements. The drawing in which an element first appears is indicated by the left-most digit in the corresponding reference number.

FIG. 1 is a diagram of a digital data device interface coupled to a digital device and a peripheral device.

FIG. 2 is a block diagram of a cellular phone having upper and lower clamshell sections that uses an MDDI interface to provide high speed data communications.

FIG. 3 is a diagram of an upper clamshell of a cellular phone with a camera.

FIG. 4A is a diagram of an MDDI host.

FIG. 4B is a diagram of the flow of packets from an MDDI packet builder to an MDDI link.

FIG. 4C is a diagram of the flow of packets received by an MDDI packet builder from an MDDI link.

FIG. 4D is a diagram of a CRC checker.

FIG. 4E is a timing diagram showing the generation of a CRC.

FIG. 4F is a timing diagram showing the receipt of a CRC.

FIG. 5 is a diagram of a sub frame header packet format.

FIG. 6 is a diagram of a video stream packet format.

FIG. 7 is a diagram of a CRC checker.

FIG. 8 is a flowchart of a method to initialize a link involving prepopulation of a CRC generator.

FIG. 9 is a diagram of a CRC generator system that provides a mechanism to intentionally corrupt a CRC value.

FIG. 10 is a diagram of a CRC checker that can interpret intentionally corrupted CRC values.

FIG. 11 is a flowchart of a method to transmit system error information over a digital transmission link by intentionally corrupting a CRC value.

FIG. 12 is a diagram of a CRC overwriting mechanism.

FIG. 13 is a flowchart of a method of CRC overwriting.

FIG. 14 is a flowchart of a method receiving a CRC value that has been overwritten.

### DETAILED DESCRIPTION OF THE INVENTION

This specification discloses one or more embodiments that incorporate the features of this invention. The disclosed embodiment(s) merely exemplify the invention. The scope of the invention is not limited to the disclosed embodiment(s). The invention is defined by the claims appended hereto.

The embodiment(s) described, and references in the specification to "one embodiment", "an embodiment", "an example embodiment", etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is understood that it is within the knowledge of one skilled in the art to effect such feature, structure, or characteristic in connection with other embodiments whether or not explicitly described.

Embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optimal, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

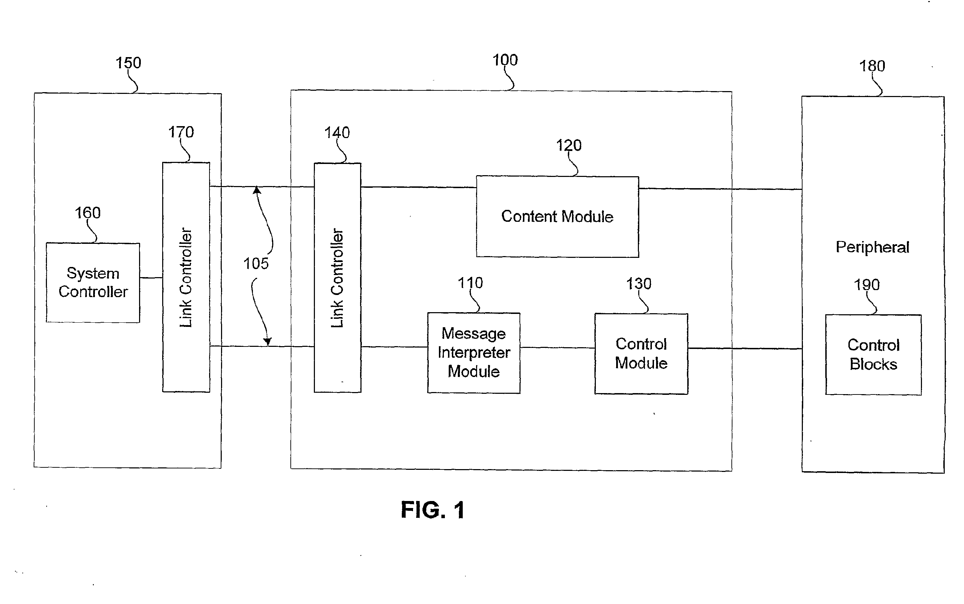

FIG. 1 is a diagram of a digital data device interface 100 coupled to a digital device 150 and a peripheral device 180. Digital device 150 can include, but is not limited to, a cellular telephone, a personal data assistant, a smart phone or a personal computer. In general digital device 150 can include any type of digital device that serves as a processing unit for digital instructions and the processing of digital presentation data. Digital device 150 includes a system controller 160 and a link controller 170.

Peripheral device 180 can include, but is not limited to, a camera, a bar code reader, an image scanner, an audio device, and a sensor. In general peripheral 180 can include any type of audio, video or image capture and display device in which digital presentation data is exchanged between a peripheral and a processing unit. Peripheral 180 includes control blocks 190. When peripheral 180 is a camera, for example, control blocks 190 can include, but are not limited to lens control, flash or white LED control and shutter control. Digital presentation data can include digital data representing audio, image and multimedia data.

Digital data interface device 100 transfers digital presentation data at a high rate over a communication link 105. In one example, an MDDI communication link can be used which supports bi-directional data transfer with a maximum bandwidth of 3.2 Gbits per second. Other high rates of data transfer that are higher or lower than this example rate can be supported depending on the communications link. Digital data interface device 100 includes a message interpreter module 110, a content module 120, a control module 130 and a link controller 140.

Link controller 140, which is located within digital data interface 100, and link controller 170, which is located within digital device 150 establish communication link 105. Link controller 140 and link controller 170 may be MDDI link controllers.

The Video Electronics Standards Association ("VESA") MDDI Standard, which is incorporated herein by reference in its entirety, describes the requirements of a high-speed digital packet interface that lets portable devices transport digital images from small portable devices to larger external displays. MDDI applies a miniature connector system and thin flexible cable ideal for linking portable computing, communications and entertainment devices to emerging products such as wearable micro displays. It also includes information on how to simplify connections between host processors and a display device, in order to reduce the cost and increase the reliability of these connections. Link controllers 140 and 170 establish communication path 105 based on the VESA MDDI Standard.

U.S. Patent No. 6,760,772, entitled *Generating and Implementing a Communication Protocol and Interface for High Data Rate Signal Transfer,* issued to Zou et al. on July 6, 2004 ('772 Patent") describes a data interface for transferring digital data between a host and a client over a communication path using packet structures linked together to form a communication protocol for presentation data. Embodiments of the invention taught in the '772 Patent are directed to an MDDI interface. The signal protocol is used by link controllers, such as link controllers 140 and 170, configured to generate, transmit, and receive packets forming the communications protocol, and to form digital data into one or more types of data packets, with at least one residing in the host device and being coupled to the client through a communications path, such as communications path 105.

The interface provides a cost-effective, low power, bi-directional, high-speed data transfer mechanism over a short-range "serial" type data link, which lends itself to implementation with miniature connectors and thin flexible cables. An embodiment of link controllers 140 and 170 establishes communication path 105 based on the teachings of the '772 Patent. The '772 Patent is herein incorporated by reference in its entirety.

In other embodiments, link controllers 140 and 170 can both be a USB link controller or they both can include a combination of controllers, such as for example, an MDDI link controller and another type of link controller, such as, for example, a USB link controller. Alternatively, link controllers 140 and 170 can include a combination of controllers, such as an MDDI link controller and a single link for exchanging acknowledgement messages between digital data interface device 100 and digital device 150. Link controllers 140 and 170 additionally can support other types of interfaces, such as an Ethernet or RS-232 serial port interface. Additional interfaces can be supported as will be known by individuals skilled in the relevant arts based on the teachings herein.

Within digital data interface device 100, message interpreter module 110 receives commands from and generates response messages through communication link 105 to system controller 160, interprets the command messages, and routes the information content of the commands to an appropriate module within digital data interface device 100.

Content module 120 receives data from peripheral device 180, stores the data and transfers the data to system controller 160 through communication link 105.

Control module 130 receives information from message interpreter 130, and routes information to control blocks 190 of peripheral device 180. Control module 130 can also receive information from control blocks 190 and routes the information to the message interpreter module 110.

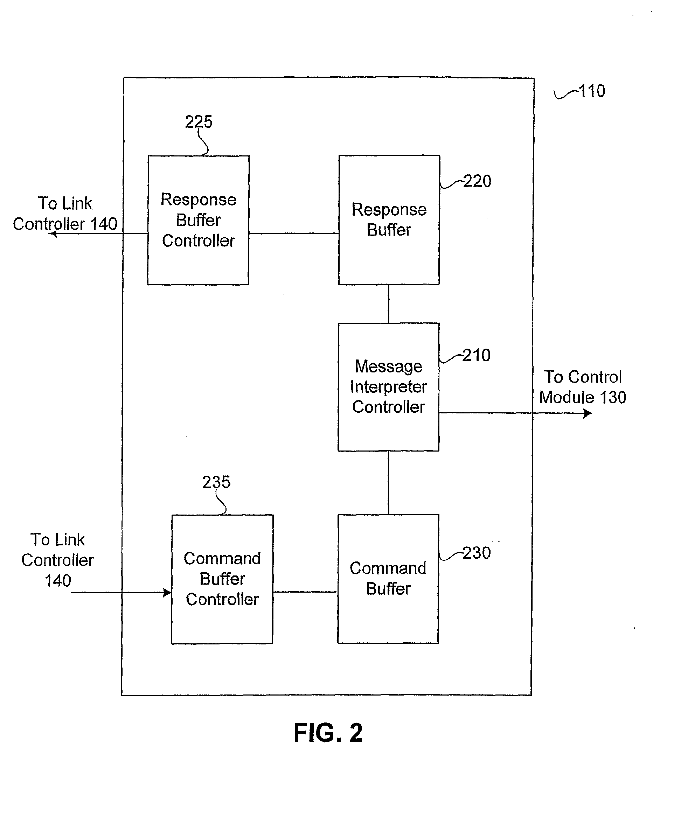

FIG. 2 is a block diagram of a cellular telephone 200 having upper and lower clamshell sections that uses an MDDI interface to provide high speed data communications between components located in the upper and lower clamshells. The following discussion related to cellular telephone 200 provides an illustrative example that further shows the utility of digital data interface device 100 and provides additional details related to its implementation and use. Based on the discussions herein, use of a digital data interface device 100 with other devices, for example, a personal digital assistant and other types of mobile phones, will be apparent and are within the spirit and scope of the invention.

Referring to FIG. 2, a lower clamshell section 202 of cellular telephone 200 includes a Mobile Station Modem (MSM) baseband chip 204. MSM 204 is a digital baseband controller. An upper clamshell section 214 of cellular telephone 200 includes a Liquid Crystal Display (LCD) module 216 and a camera module 218. Both lower clamshell section 202 and upper clamshell section 214 are encased in plastic as is typically used with cellular phones. Hinges 250 and 252 mechanically connect lower clamshell 202 to upper clamshell 214. Flexible coupling 254 provides electrical coupling between lower clamshell 202 and upper clamshell 214.

MDDI link 210 connects camera module 218 to MSM 204. Typically, an MDDI link controller is provided for each of camera module 218 and MSM 204. Within cellular telephone 200, for example, an MDDI Host 222 is integrated into interface system 230 which is coupled to camera module 212, while an MDDI Client 206 resides on the MSM side of the MDDI link 210. Typically, the MDDI host is the master controller of the MDDI link.

In cellular telephone 200 pixel data from camera module 218 are received and formatted into MDDI packets by interface system 230 using MDDI Host 222 before being transmitted onto MDDI link 210. MDDI client 206 receives the MDDI packets and re-converts them into pixel data of the same format as generated by camera module 218. The pixel data are then sent to an appropriate block in MSM 204 for processing.

Similarly, MDDI link 212 connects LCD module 216 to MSM 204. MDDI link 212 interconnects an MDDI Host 208, integrated into MSM 204, and an MDDI Client 220 integrated into interface system 232 which is coupled to LCD module 216. Display data generated by a graphics controller of MSM 204 are received and formatted into MDDI packets by MDDI Host 208 before being transmitted onto MDDI link 212. MDDI client 220 receives the MDDI packets and re-converts them into display data and processes the display data through interface system 232 for use by LCD module 216.

Interface systems 230 and 232 represent different embodiments of digital data device interface 100. In the case of interface system 230, digital data device interface 100 elements will be implemented to support data transfer of camera images and camera control functions for a camera. In the case of interface system 232, digital data device interface 100 elements will be implemented to support data display to an LCD and control functions for the LCD. Interface system 230 is further explained to illustrate an embodiment of digital data device interface 100 when used in a cellular telephone with a camera, such as cellular telephone 200 with camera module 218.

The relationship between the devices in FIG. 1 and cellular telephone 200 is as follows. Digital data device interface 100 is represented by interface system 230. Link controller 140 is represented by MDDI Host 222. Peripheral 180 is represented by camera module 218. System controller 160 is represented by MSM 204 and link controller 170 is represented by MDDI client 206.

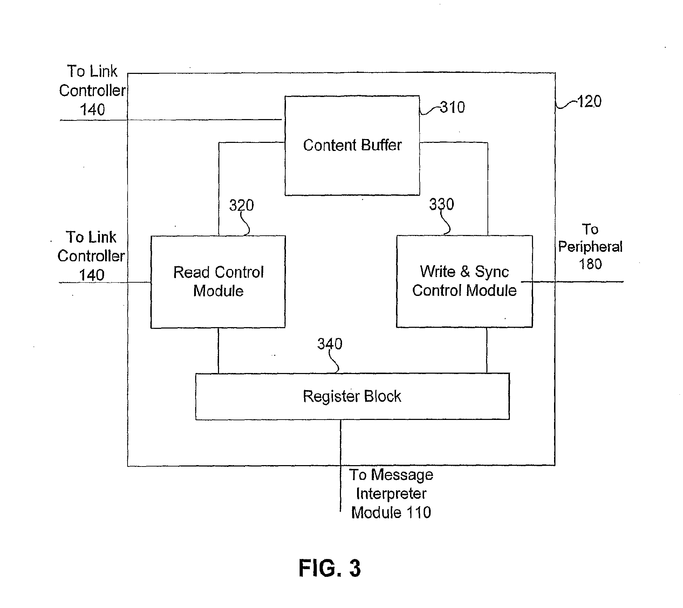

FIG. 3 is a diagram of upper clamshell 214 and provides further details related to interface system 230 to highlight the example embodiment of digital data device interface 100 as used within a cellular telephone with a camera. Interface system 230 includes MDDI host 222, camera message interpreter 302, camera video interface 304, I2C master 303, motor control 308 and flash/white LED timer 310. The I2C bus is a commonly used control bus that provides a communication link between circuits. The I2C bus was developed by Philips Electronics N.V. in the 1980s.

Recall that interface system 230 corresponds to digital data device interface 100. The components of interface system 230 correspond to the components of digital data device interface 100 in the following manner. Camera message interpreter 302 corresponds to message interpreter module 100. Camera video interface 304 corresponds to content module 120. Collectively, I2C master 303, motor control 308 and flash/white LED timer 310 correspond to control module 130.

Camera message interpreter 302 receives commands and generates response messages through MDDI host 222 to MSM 204. Camera message interpreter 302 interprets the messages and routes the information content to the appropriate block within interface system 230, which can be referred to as an MDDI camera interface device. Camera video interface 304 receives image data from camera 320, stores the image data, and transfers the image data to MDDI host 222. Collectively, I2C master 306, motor control 308 and flash/white LED timer 310 form a camera control block. In this case I2C master 306 provide controls for managing camera 320, motor control 308 provides controls for managing lens 322 (*e.g.,* lens zoom functions), and flash/white LED timer 310 provides controls for managing flash/white LED 324 (e.g., flash brightness and duration.)

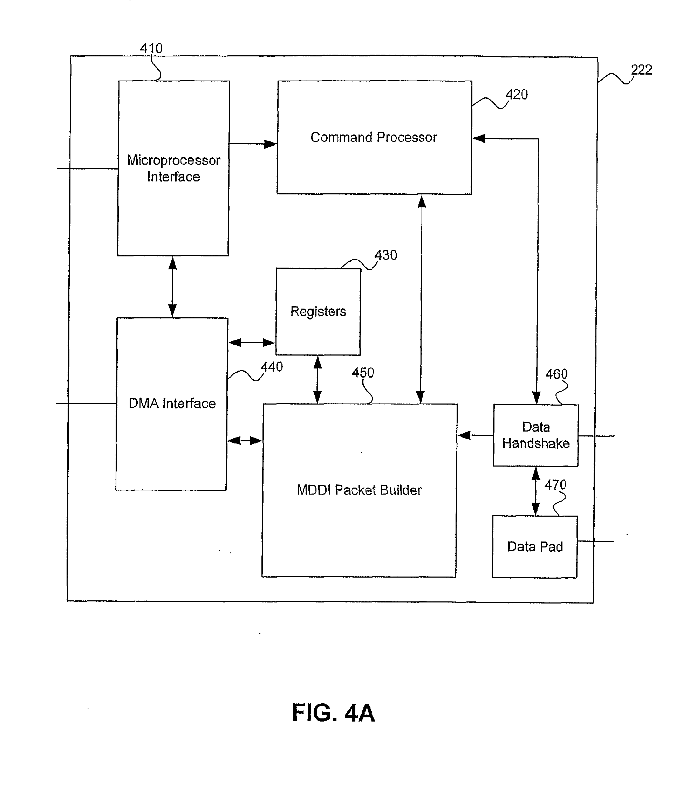

FIG. 4A is a diagram of MDDI Host 222. MDDI Host 222 includes microprocessor interface 410, command processor 420, registers 430, Direct Memory Access (DMA) interface 440, MDDI packet builder 450, data handshake module 460 and data pad 470. Microprocessor interface 410 interfaces with a bus to a host processor that controls MDDI host 222. The host processor uses microprocessor interface 410 to set registers, read registers and issue commands to MDDI host 222. Microprocessor interface 410 looks at address values and passes the data off to the appropriate module within MDDI host 222, including the passing of writes to command processor 420 and reads and writes to registers values within registers 430.

Command processor 420 processes commands received from the host processor. The commands include powering down MDDI link 210, powering MDDI link 210 up, resetting MDDI host 222, and generating certain types of data packets.

Registers 430 store registers for the transmission of data across MDDI link 210. The registers within registers 430 control the behavior of MDDI link 210, as well as the configuration of MDDI host 222.

DMA interface 440 provides burst requests to external memory to receive information from interface system 230 to buffer data for MDDI packet builder 450. DMA interface 440 parses data of link list node headers and adjusts pointers to read the actual packet data. DMA interface 440 presents the information about the next data packet to send out to MDDI packet builder 450.

MDDI packet builder 450 makes decisions about what packet to send next as well as building the physical packets that will need to go over MDDI link 222. The packets are built from internal registers, counters, and data retrieved by DMA interface 440. When data is to be output over MDDI link 222, output data can be generated from several sources. The first source of packets are control type packets that are generated internally to MDDI packet builder 450. Example packets include sub-frame header packets, fill packets and link shutdown packets. Another source of packets is through DMA interface 440. These packets include packets passed via linked lists. In other embodiments video data, when the peripherals include a video camera, can be passed directly to MDDI packet builder 450. Regardless of the source of the packets, all packets are processed through a CRC generator system that resides within MDDI packet builder 450.

Data handshake module 460 manages the physical MDDI link 210. This is accomplished with a state machine that is responsible for the handshaking process, data output, round trip delay measurements and reverse data. Data handshake module 460 receives data from MDDI packet builder 450 and pass the data out to data pad 470, which shifts the data out onto MDDI link 222.

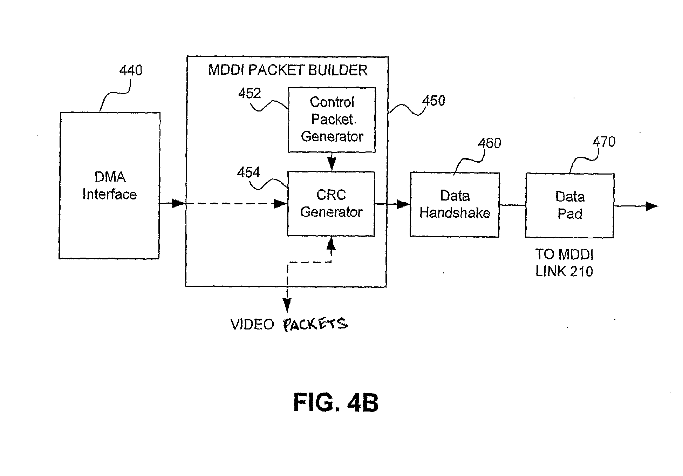

FIG. 4B illustrates the flow of packets to be provided out to MDDI Link 210. As indicated above, packets can be generated internally, received from DMA interface 440 or be directly received video packets. Internally generated packets are generated by control packet generator 452. All types of packets are passed through CRC generator system 454 to data handshake module 460. Data handshake module 460 in turn provides the packets to data pad 470, which places the data on MDDI link 210.

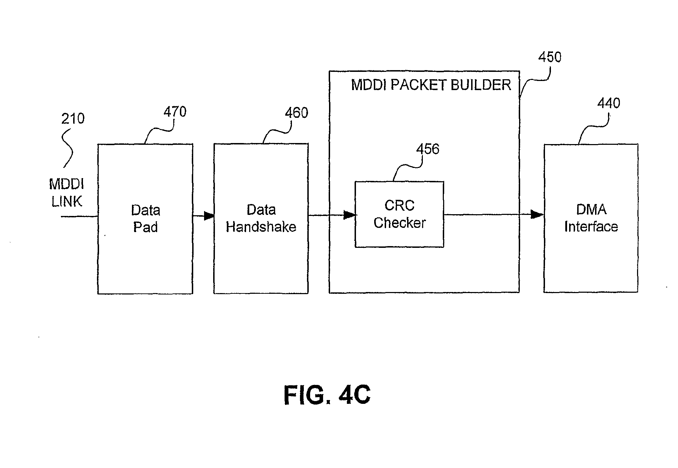

FIG. 4C illustrates the flow of packets received over MDDI link 210 by MDDI packet builder 450. In this case, packets are received by data pad 470 from MDDI link 210, then passed to data handshake module 460. Data handshake module 460 passes the data to CRC checker 456 within MDDI packet builder 450. Once CRC checker 456 has verified the CRC of the incoming packet, the packet is provided to DMA interface 440 to be placed on a processor bus for distribution within digital data interface device 100.

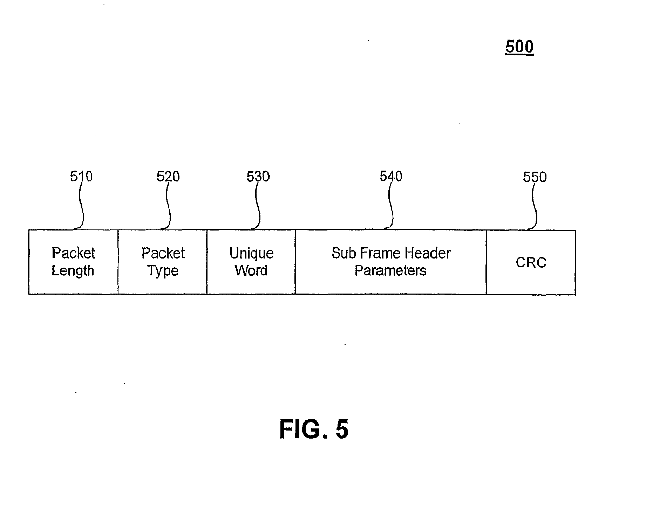

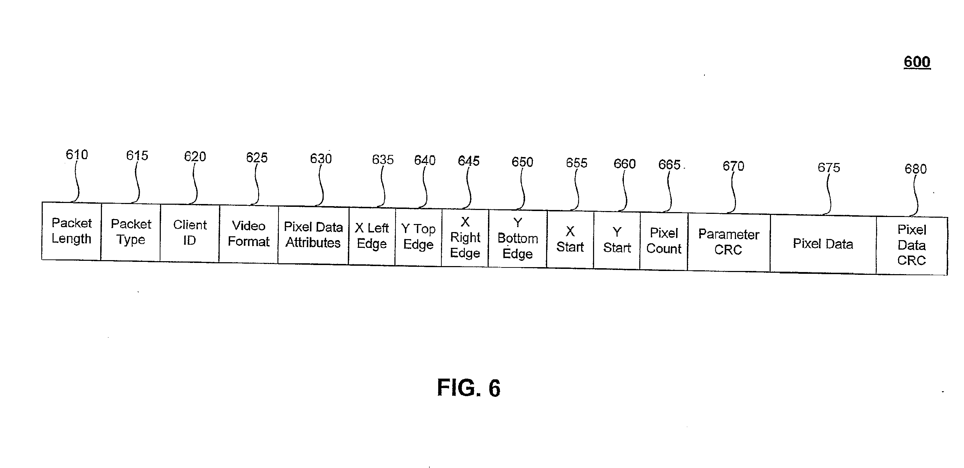

Example packet types are described with reference to FIGs. 5 and 6. These example packets are used to illustrate the present invention, but are not intended to limit the invention to only these types of packets. Other packet types using unique patterns, as described below, and CRC fields can be used with the invention.

FIG. 5 is a diagram of a sub frame header packet format 500, according to the VESA MDDI Interface standard. Sub frame header packet format 500 includes a packet length field 510, a packet type length field 520, a unique word field 530, a sub-frame header parameter field 540 and a CRC field 550. Packet length field 510 includes a 16 bit (2 bytes) value that specifies the total number of bytes in a packet not including packet length field 510. Packet type field 520 includes a 16 bit unsigned integer that specifies the type of information contained in a packet. Unique word field 530 includes a 16 bit word that is unique. Both the unique word field and packet type field 520 are recognized to form a 32-bit unique pattern to align the data. That is, when receiving packets MDDI packet builder 450 can determine based on the unique pattern what portion or field of a data packet MDDI packet builder 450 is processing. Sub-frame header parameter field 540 includes control parameters for managing MDDI link 222. CRC field includes a 16 bit CRC value.

FIG. 6 is a diagram of a video stream packet format 600. Video stream packets carry video data to update a rectangular portion of a display. Video stream packet format 600 includes packet length field 610, packet type field 615, client ID field 620, video format field 625, pixel data attributes field 630, X left edge field 635, Y top edge field 640, X right edge field 645, y bottom edge field 650, X start field 655, Y start field 660, pixel count field 665, parameter CRC field 670, pixel data field 675, and pixel data CRC field 680.

Packet length field 610 includes a 16 bit (2 bytes) value that specifies the total number of bytes in a packet not including packet length field 610. Packet type field 620 includes a 2 byte unsigned integer that specifies the type of information contained in a packet.

Fields 620 through 665 are each 2 byte fields that contain parameter data related to how a video display should be formatted. The specific definitions for these fields can be found within the VESA MDDI Interface Standard. Parameter CRC field 670 is a two byte field that contains a CRC value generated by processing the parameter data in fields 610 through 665.

Pixel data field 675 includes any amount of pixel data up to an amount allowed by the size of the packet and the pixel count field. Pixel CRC field 680 is a two byte field that contains a CRC value generated by processing the pixel data within pixel data field 675.

Every packet sent over the MDDI link 210 will include at least one CRC field, such as CRC field 550 within sub-frame header packet format 500. In some longer packets, the packet will include two CRC fields, such as parameter CRC field 670 and pixel CRC field 680 within video stream packet format 600.

A CRC produces a small number of bits, from a large block of data, such as a packet of network traffic or a block of a computer file, in order to detect errors in transmission or storage. A CRC is computed as a function of the data to be sent and appended before transmission or storage (for example, with CRC field 550), and verified afterwards to confirm that no changes occurred.

A CRC is computed by pushing packet data through a CRC generator, such as CRC generator system 454, to create a unique CRC value associated with the packet data. A CRC checker, such as CRC checker 456, generates a received data CRC value based on the received data. The received data CRC value is then compared to the CRC value that was sent. If the two match, then the data is considered to be valid data, otherwise a CRC error is generated.

CRCs are popular because they are simple to implement in binary hardware, are easy to analyze mathematically, and are particularly good at detecting common errors caused by noise in transmission channels. Specific implementations for CRC generators will be known to individuals skilled in the relevant arts.

As illustrated in FIGs. 5 and 6, CRC fields appear at the end of the packets (e.g., CRC field 512 and Pixel data CRC field 680) and sometimes after certain more critical parameters in packets that may have a significantly large data field (e.g., Parameter CRC field 670), and thus, an increased likelihood of errors during transfer. In packets that have two CRC fields, the CRC generator, when only one is used, is re-initialized after the first CRC so that the CRC computations following a long data field are not affected by the parameters at the beginning of the packet.

There is a remote possibility for packets containing multiple bit errors to produce a good CRC. The probability of detecting a good CRC on a packet with errors approaches 7.6 x 10⁻⁶ on very long packets containing many errors. By design, the MDDI link will have a very low or zero error rate. The CRC is intended to be used to monitor the health of the link, and is not intended to detect errors on specific packets to determine whether packets should be retransmitted.

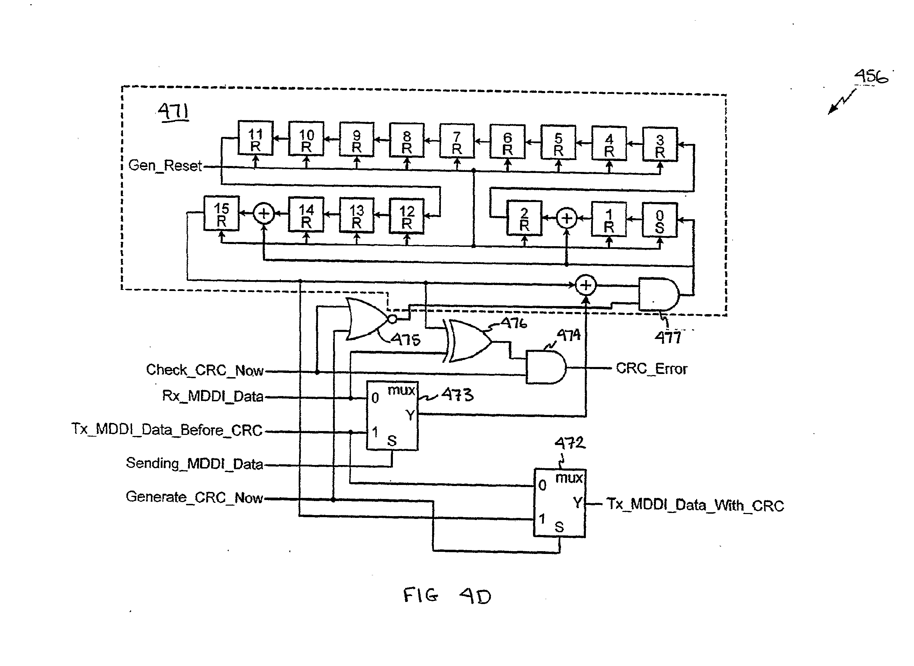

In an exemplary embodiment, the polynomial used for the CRC calculation is known as the CRC-16, or X16 + X15 + X2 + X0. A sample implementation of a CRC generator 454 and CRC checker 456 useful for implementing the invention is shown in FIG. 4D. In FIG. 4D, a CRC register 471 is initialized to a value of 0×0001 just prior to transfer of the first bit of a packet which is input on the Tx_MDDI_Data_Before_CRC line, then the bytes of the packet are shifted into the register starting with the LSB first. Note that the register bit numbers in this figure correspond to the order of the polynomial being used, and not the bit positions used by the MDDI. It is more efficient to shift the CRC register in a single direction, and this results in having CRC bit 15 appear in bit position 0 of the MDDI CRC field, and CRC register bit 14 in MDDI CRC field bit position 1, and so forth until MDDI bit position 14 is reached.

As an example, if the packet contents are: 0×000c, 0×0046, 0×000, 0×0400, 0×00, 0×00, 0×0000 (or represented as a sequence of bytes as: 0×0c, 0×00, 0×46, 0×00, 0×00, 0×00, 0×00, 0×04, 0×00, 0×00, 0×00, 0×00), and are submitted using the inputs of the multiplexors 472 and 473, and AND gate 474, the resulting CRC output on the Tx_MDDI_Data_With_CRC line is 0xd9aa (or represented as a sequence as 0xaa, 0xd9).

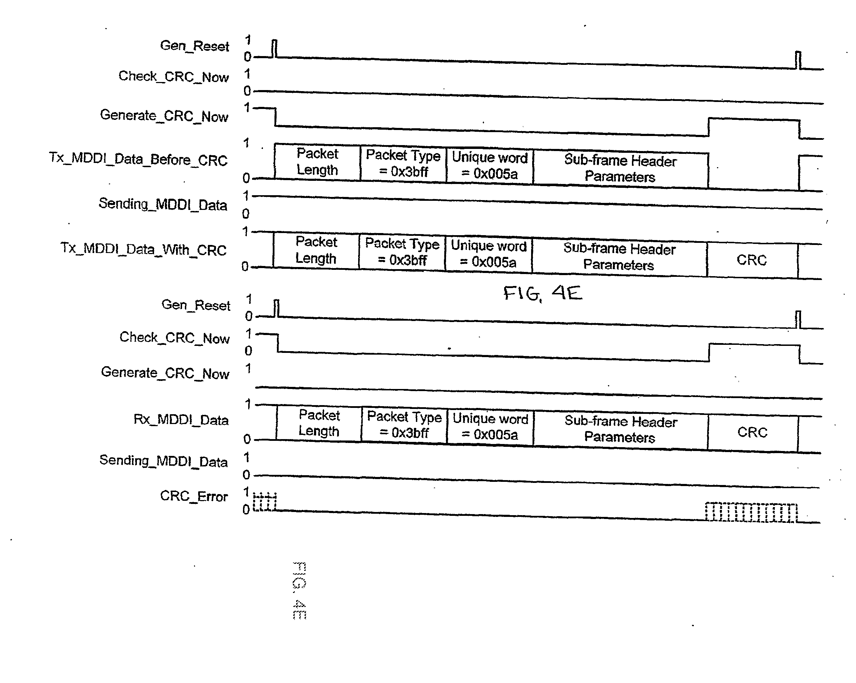

When CRC generator 454 and CRC checker 456 is configured as a CRC checker, the CRC that is received on the Rx_MDDI_Data line is input to multiplexor 472 and exclusive-OR (XOR) gate 476, and is compared bit by bit with the value found in the CRC register using NOR gate 475, AND gate 474, and AND gate 477. If there are any errors, as output by AND gate 477, the CRC is incremented once for every packet that contains a CRC error by connecting the output of gate 477 to the input of register 471. Note that the example circuit shown in the diagram of FIG. 4D can output more than one CRC error signal within a given CHECK_CRC_NOW window (see FIG. 4E). Therefore, the CRC error counter generally only counts the first CRC error instance within each interval where CHECK_CRC_NOW is active. If configured as a CRC generator the CRC is clocked out of the CRC register at the time coinciding with the end of the packet.

The timing for the input and output signals, and the enabling signals, is illustrated graphically in FIGs. 4E and 4F. The generation of a CRC and transmission of a packet of data are shown in FIG. 4E with the state (0 or 1) of the Gen_Reset, Check_CRC_Now, Generate_CRC_Now, and Sending_MDDI_Data signals, along with the Tx_MDDI_Data_Before_CRC and Tx_MDDI_Data_With_CRC signals. The reception of a packet of data and checking of the CRC value are shown in FIG. 4F, with the state of the Gen_Reset, Check_CRC_Now, Generate_CRC_Now, and Sending_MDDI_Data signals, along with the Rx_MDDI_Data and CRC error signals.

The presence of CRCs within packets presents operational challenges and also affords various opportunities to more efficiently utilize MDDI Link 210. While the discussions focus on CRC uses in the context of MDDI link 210, the present invention is not limited to the MDDI context. The present invention can be applied to any type of digital data transmission link in which CRCs are used.

One challenge associated with the use of CRCs relates to link initialization. When a link is brought up, a sub frame header packet, such as sub-frame header packet 500, will be sent by MDDI host 222 to MDDI client 206. Upon link initialization, ordinarily CRC checker 456 would not know the alignment of data within the data stream. That is, it would not know, for example, whether it was processing data within the unique word field 530 or CRC field 550. As a result CRC checker 456 would need to continually queue data into memory until it recognized where within the data stream it was. This leads to inefficiencies and requires more memory and chip area used to queue and store data. Without knowing the precise location within the data stream, CRC checker 456 would not be able to generate a CRC that could be compared to a received CRC to validate the received data.

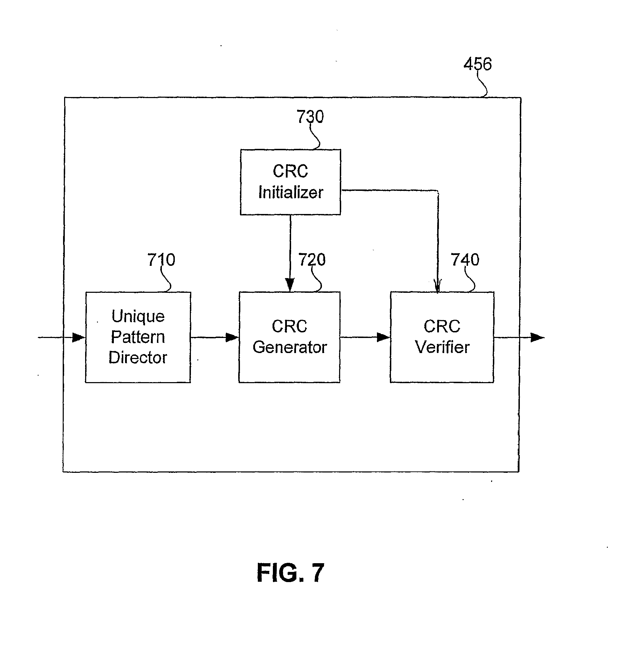

FIG. 7 is a diagram of a CRC checker 456 that addresses these challenges. CRC checker 456 includes unique pattern detector 710, CRC generator 720, CRC initializer 730 and CRC verifier 740. Unique pattern detector 710 detects a unique pattern within an incoming data stream to identify a particular point in the data stream. CRC generator 720 is a standard CRC generator used to generate CRC values associated with received data. CRC initializer 730 pumps CRC generator 720 with the data values associated with the unique pattern and packet length. CRC verifier 740 compares the received CRC value to the CRC value generated by CRC generator 720 based on the received data to validate the data.

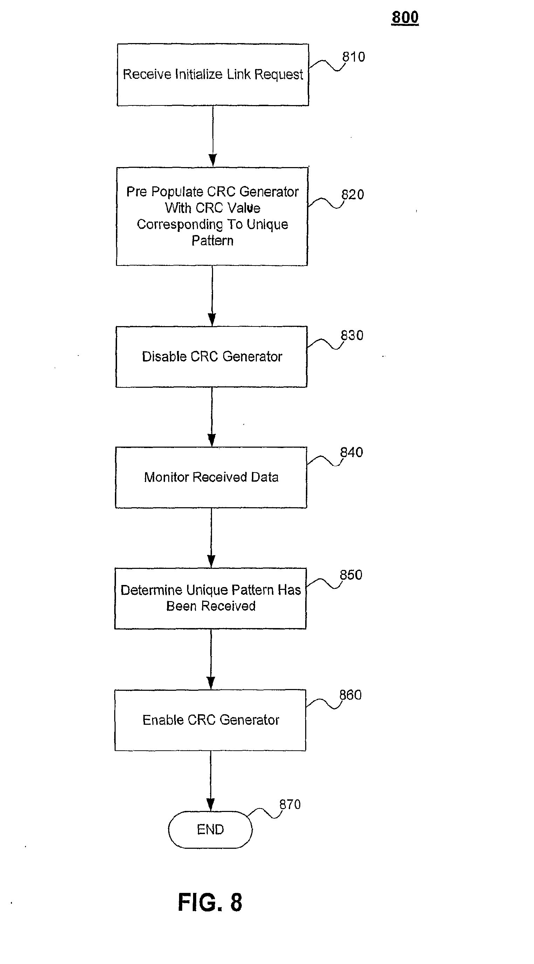

FIG. 8 is a flowchart of method 800 to initialize a link that demonstrates the use of CRC checker 456 as depicted in FIG. 7. In one approach, the packet length of a subframe header is assumed to always be the same, and a pre-calculated value is loaded into a CRC checker which is a partial CRC based on the packet length, packet type and unique word. An alternative approach supports the situation where the packet length is variable. In this situation, the packet length along with the unique pattern could be pumped through a pre-calculator to create a value that would then be placed in the CRC checker at the point when the unique pattern has been received.

Method 800 begins in step 810. In step 810, a request to initialize or wake-up a transmission link is received. For example, MDDI client 206 could receive a request from MDDI host 222 to initialize or wake-up MDDI link 210. Within MDDI client 206, CRC checker 456 would be initialized by this link wake-up request. In particular, CRC initializer 730 would be initialized by the request.

In step 820, a CRC generator is pre-populated with the data values associated with the unique pattern and the packet length field 510, such that the CRC values associated with the unique pattern and packet length field can be generated by the CRC generator. As indicated above, in one embodiment, the packet length field is assumed to be fixed. For example, CRC initializer 730 can provide the unique pattern and packet length field to CRC generator 720. In the case of MDDI, the unique pattern is the data values associated with the data contained within the packet type field 520 and unique word field 530. Upon waking up a link, the values of these fields will be known *a priori*. Thus, CRC initializer 730 can store them and be in a position to provide them to CRC generator 730 when a wake-up link request is received. In an alternative approach, rather that provide the data values to a CRC generator, a CRC checker can be preloaded with the precalculated CRC value that would have been generated by a CRC generator had the unique pattern and packet length field been provided to the CRC generator.

In step 830, a CRC generator, such as CRC generator 720, is disabled. The generator is disabled so as to not process further data that would change the CRC value until the unique pattern and packet length field are received.

In step 840, incoming data is monitored to check for receipt of the unique data pattern. For example, unique pattern detector 710 monitors the received data from MDDI link 210.

In step 850, a determination is made that the unique pattern has been received. For example, unique pattern detector 710 determines that packet length field 510, packet type field 520 and unique word field 530 have been received.

In step 860, the CRC generator is enabled. Upon being enabled, CRC generator 720 will build upon the existing CRC value that was generated using the preloaded unique pattern. As a result, CRC generator 720 is immediately aligned with the data, and there is no need to queue or store data in memory. Upon receipt of the CRC value contained in CRC field 550, CRC verifier 740 can compare the value within CRC field 550 to the value generated by CRC generator 720 to determine whether a CRC error exists. In step 870, method 800 ends.

Ordinarily, CRC values are used to determine whether a problem on a transmission link corrupted the data during transmission. In another aspect of the invention, CRC values are used to convey information related to system errors and status. In this way, the CRC fields within messages can be used more efficiently to support both identification of transmission link problems and system status or error information.

In one embodiment of the invention, the CRC field data is corrupted to indicate simply that something is wrong with the system transmitting the data and therefore there may be problems with the data that is being received. For example, in some cases the data going out over MDDI link 210 would be corrupted because the data coming into MDDI packet builder 450 was not received quickly enough. Even though insufficient data was available for the packet, the MDDI specification states that a packet still should be sent. Thus, even though a packet is sent the data may not be valid or in some way insufficient.

In this case, the CRC value, such as parameter CRC 670 or pixel data CRC 680 could be intentionally corrupted, so that MDDI client 206 can recognize that something happened to impair the integrity of the packet that was transmitted. Within the MDDI specification, this is a way to advise MDDI client 206 that there was a problem with the data. Alternatively, another message would need to be sent that follows the packet containing the errors that in effect says, the last packet that I sent was bad.'

When MDDI client 206 receives a packet in which the CRC value has been intentionally corrupted, it makes a decision on how to handle the packet. Algorithms can be developed to detect and determine how to handle a packet having an intentionally corrupted CRC value. For certain types of packets MDDI client 206 may simply record a CRC error and continue to use the data. While in other situations, MDDI client 206 may discard the received packet and request a new packet.

For example, within video packets, such as video stream packet 600, if the pixel data CRC value 680 is intentionally corrupted, MDDI client 220 would not notify the logic outside of MDDI client 220 that a packet was corrupted. In this case, the received data could be buffered before providing any sort of error notification. There is not enough memory to buffer potentially all of the video data (i.e., all pixel data to be displayed). Thus, as soon as pixel data is received it is provided to the display. As a result if there is a CRC error somewhere in the video information, it is too late to stop the video information from being used. In this case, nothing is done other than to record that a problem had occurred. In summary, if an intentionally corrupted CRC error occurs in the pixel data and not in the parameter data, the MDDI client simply records the CRC error in an error counter, but still uses the subsequent pixel data. If, on the other hand, a parameter CRC value is intentionally corrupted, then the MDDI client will not use the pixel data.

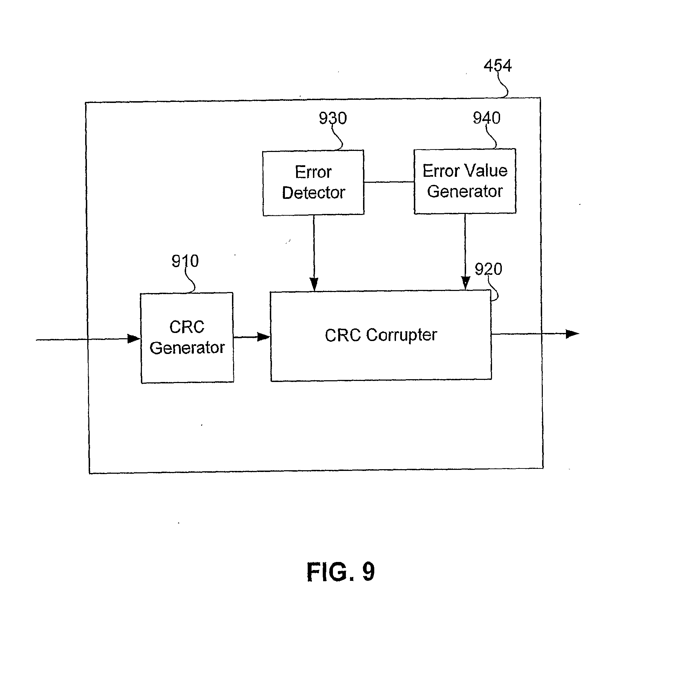

FIG. 9 is a diagram of cyclic redundancy generator system 454 that provides a mechanism to intentionally corrupt a CRC value. Cycle redundancy generator system 454 includes CRC generator 910, CRC corrupter 920, error detector 930 and error value generator 940.

CRC generator 910 generates a CRC value based on data to be included in a data packet to be transmitted over a digital transmission link, such as, but not limited to, MDDI link 210.

CRC corrupter 920 corrupts a CRC value generated by CRC generator 910 to convey host or remote system status information. For example, if interface system 230 is unable to provide data quickly enough to MDDI host 222 to properly populate an MDDI packet, CRC corrupter 920 intentionally corrupts the CRC value of the packet to be sent.

Error detector 930 detects an error condition within a host system, such as either MDDI host 222, or receives error condition information based on information received from interface system 230 and provides instructions for the CRC corrupter 920 to intentionally corrupt a CRC value. In one embodiment, error detector 930 simply detects that something is wrong, but does not determine a specific error condition. In another embodiment, error detector 930 determines a specific type of error condition. In the latter embodiment, error detector 930 conveys the nature of the error to error value generator 940. Error value generator 940 instructs CRC corrupter 940 to replace a CRC value generated by the CRC generator 910 with a specific value that indicates a type of system error or status condition.

When corrupting the CRC value, algorithms must be chosen to ensure that the intentional corruption does not lead to a CRC value that could correspond to valid data, and therefore would not be received as a unique CRC value by a CRC checker on the receiving end of a transmission link. One possible algorithm would be to identify those CRC values that would not be produced by valid data, and use those values as the unique values for intentionally corrupting a CRC value. Based on the teachings herein, individuals skilled in the relevant arts will determine other algorithms, which are included within the spirit and scope of the present invention.

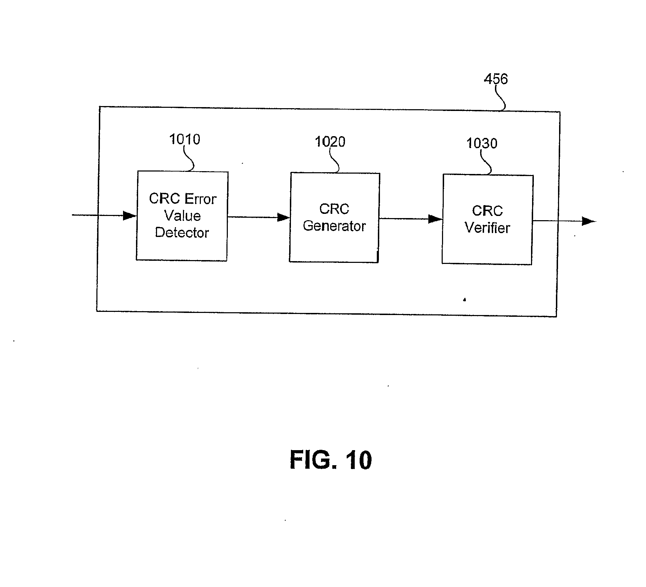

FIG. 10 is a diagram of a CRC checker 456 that can interpret intentionally corrupted CRC values from CRC generator system 454. CRC checker 456 includes CRC error value detector 1010, CRC generator 1020 and CRC verifier 1030. CRC error value detector 1010 detects values within a CRC field of a data packet received over a digital transmission link. CRC error value detector 1010 identifies when a CRC value corresponds to an intentionally corrupted CRC value that identifies a system error condition. When a CRC value is identified that corresponds to system error condition, CRC error value detector 1010 notifies the host processor of the receiving client, such as MDDI client 206. The host processor would then take action based on the type of error detected. CRC generator 1020 generates CRC values based on a received data stream. CRC verifier 1030 detects differences between a CRC value generated based on a received data stream to a CRC value that was sent within the received data stream. CRC generator 1020 and CRC verifier 1030 operate in a traditional manner that will be known to individuals skilled in the relevant arts.

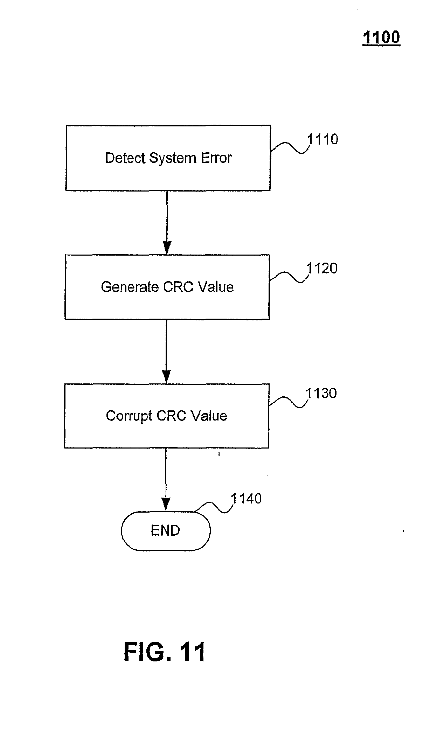

FIG. 11 is a flowchart of method 1100 to transmit system error information over a digital transmission link by intentionally corrupting a CRC value. Method 1100 begins in step 1110. In step 1110, an error within a host system or related system is detected. For example, error detector 930 detects an error within MDDI host 222 or interface system 230. In step 1120 a CRC value is generated. For example, CRC generator 910 generates a CRC value for data associated with a packet to be sent. In step 1130, the CRC value is corrupted. For example, error detector 930 instructs CRC corrupter 920 to corrupt a CRC value. In step 1140, method 1100 ends. Note that while method 1100 has been described with reference to a system involving MDDI, method 1100 is applicable to any digital transmission system in which CRCs are used.

Within the present invention, CRC fields may also be used to transmit error code information to represent types of errors. Whenever only data packets and CRC are being transferred between the host and client, there are no error codes being accommodated. The only error is a loss of synchronization. Otherwise, one has to wait for the link to timeout from a lack of a good data transfer path or pipeline and then reset the link and proceed. Unfortunately, this is time consuming and somewhat inefficient.

For use in one embodiment, a new technique has been developed in which the CRC portion of packets is used to transfer error code information. That is, one or more error codes are generated by the processors or devices handling the data transfer which indicate specific predefined errors or flaws that might occur within the communication processing or link. When an error is encountered, that the appropriate error code is generated and transferred using the bits for the CRC of a packet. That is, the CRC value is overloaded, or overwritten, with the desired error code, which can be detected on the receiving end by an error monitor or checker that monitors the values of the CRC field. For those cases in which the error code matches the CRC value for some reason, the compliment of the error is transferred to prevent confusion.

In one embodiment, to provide a robust error warning and detection system, the error code may be transferred several times, using a series of packets, generally all, that are transferred or sent after the error has been detected. This occurs until the point at which the condition creating the error is cleared from the system, at which point the regular CRC bits are transferred without overloading by another value.

This technique of overloading the CRC value provides a much quicker response to system errors while using a minimal amount of extra bits or fields.

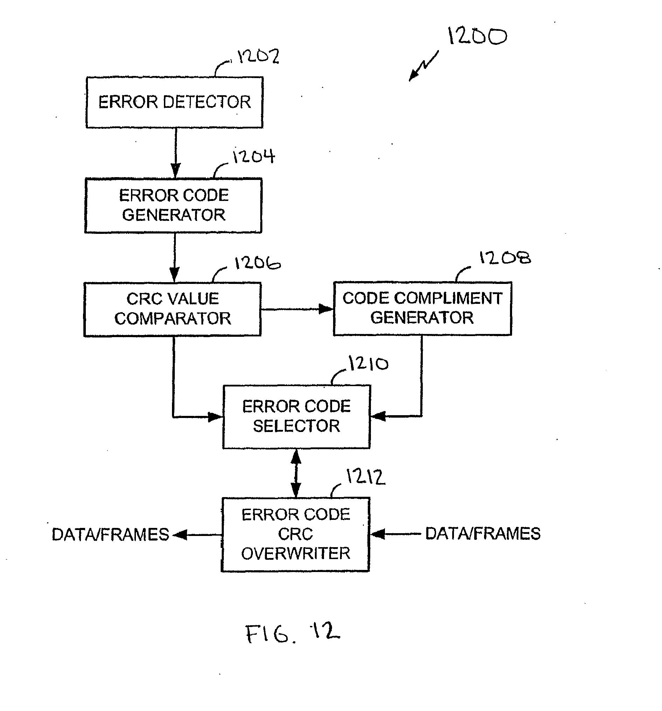

As shown in FIG. 12, a CRC overwriting mechanism or apparatus 1200 is shown using an error detector or detections means 1202, such as error detector 930, which can form part of other circuitry previously described or known, detects the presence or existence of errors within the communication link or process. An error code generator or means 1204, such as error value generator 940, which can be formed as part of other circuitry or use techniques such as look up tables to store pre-selected error messages, generates one or more error codes to indicate specific predefined errors or flaws that have been detected as occurring. It is readily understood that devices 1202 and 1204 can be formed as a single circuit or device as desired, or as part of a programmed sequence of steps for other known processors and elements.

A CRC value comparator or comparison means 1206, such as CRC verifer 1030, is shown for checking to see if the selected error code or codes are the same as the CRC value being transferred. If that is the case then a code compliment generator or generation means or device is used to provide the compliment of the error codes as to not be mistaken as the original CRC pattern or value and confuse or complicate the detection scheme. An error code selector or selection means element or device 1210 then selects the error code or value it is desired to insert or overwrite, or their respective compliments as appropriate. An error code CRC over-writer or over writing mechanism or means 1212, such as CRC corrupter 920, is a device that receives the data stream, packets, and the desired codes to be inserted and overwrites the corresponding or appropriate CRC values, in order to transfer the desired error codes to a receiving device.

As mentioned, the error code may be transferred several times, using a series of packets, so the over-writer 1212 may utilize memory storage elements in order to maintain copies of the codes during processing or recall these codes from previous elements or other known storage locations which can be used to store or hold their values as needed, or as desired.

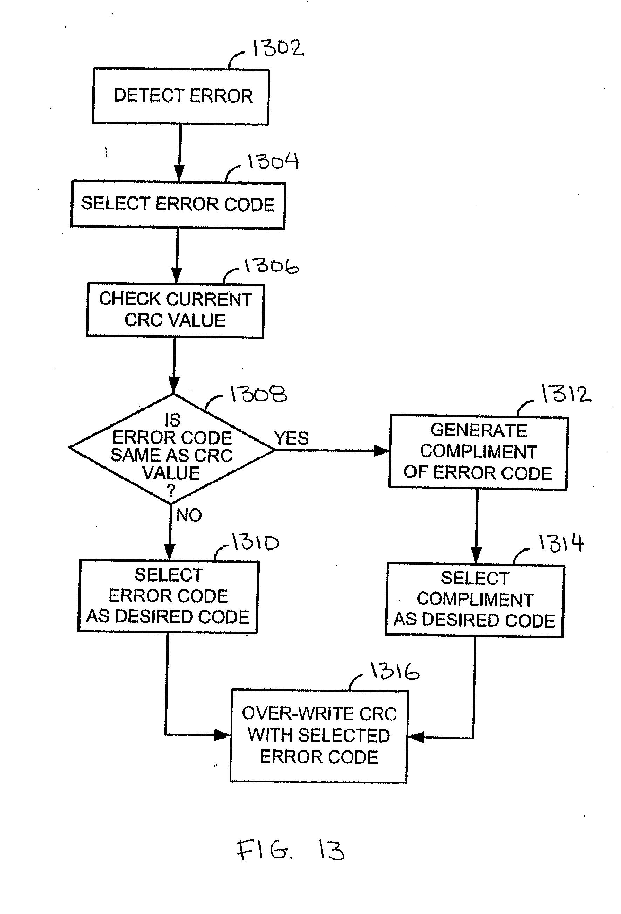

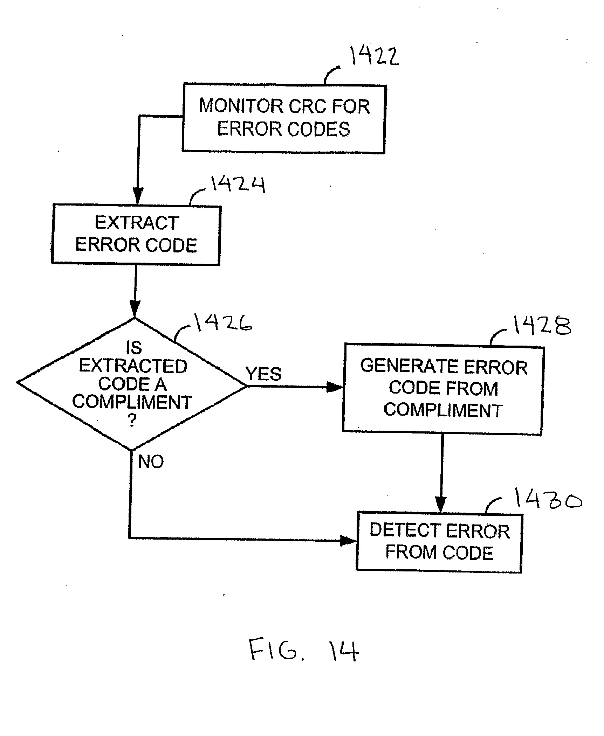

The general processing of the overwriting mechanism of FIG. 12 is implementing is shown in additional detail in FIGs. 13 and 14. In FIG. 13, one or more error is detected in step 1302 in the communication data or process and an error code is selected in step 1304 to indicate this condition. At the same time, or at an appropriate point, the CRC value to be replaced is checked in a step 1306, and compared to the desired error code in step 1308. The result of this comparison, as discussed earlier, is a determination as to whether or not the desired code, or other representative values, will be the same as the CRC value present. If this is the case, then processing proceeds to a step 1312 where the compliment, or in some cases another representative value, as desired, is selected as the code to insert. One it has been determined what error codes or values are to be inserted in steps 1310 and 1314, that appropriate code is selected for insertion. These steps are illustrated as separate for purposes of clarity but generally represent a single choice based on the output of the step 1308 decision. Finally, in step 1316 the appropriate values are overwritten in the CRC location for transfer with the packets being targeted by the process.

On the packet reception side, as shown in FIG. 14, the packet CRC values are being monitored in a step 1422. Generally, the CRC values are being monitored by one or more processes within the system to determine if an error in data transfer has occurred and whether or not to request a retransmission of the packet or packets, or to inhibit further operations and so forth, some of which is discussed above. As part of such monitoring the information can also be used to compare values to known or pre-selected error codes, or representative values and detect the presence of errors. Alternatively, a separate error detection process and monitor can be implemented. If a code appears to be present it is extracted or otherwise noted in step 1424 for further processing. A determination can be made in step 1426 as to whether or not this is the actual code or a compliment, in which case an additional step 1428 is used to translate the value to the desired code value. In either case the resulting extracted code, compliment, or other recovered values are then used to detect what error has occurred form the transmitted code in step 1430.

### Conclusion

Exemplary embodiments of the present invention have been presented. The invention is not limited to these examples. These examples are presented herein for purposes of illustration, and not limitation. Alternatives (including equivalents, extensions, variations, deviations, etc., of those described herein) will be apparent to persons skilled in the relevant art(s) based on the teachings contained herein. Such alternatives fall within the scope and spirit of the invention.

All publications, patents and patent applications mentioned in this specification are indicative of the level of skill of those skilled in the art to which this invention pertains, and are herein incorporated by reference to the same extent as if each individual publication, patent or patent application was specifically and individually indicated to be incorporated by reference.

In the following further aspects of the invention are described to further facilitate the understanding of the invention.

In one aspect, a cyclic redundancy check (CRC) checker is described, the checker comprising a unique pattern detector that detects a unique pattern within a data stream received over a digital transmission link, a CRC generator that generates CRC values based on the received data stream, a CRC initializer and a CRC verifier that detects differences between a CRC value generated based on a received data stream to a CRC value that was sent within the received data stream. Thereby, the CRC initializer may prepopulate the CRC generator with the unique pattern upon link initialization. Also, the CRC initializer may prepopulate the CRC verifier with a CRC value associated with the unique pattern. Thereby, the digital transmission link may be an MDDI transmission link. Also, the unique data pattern may include the packet length, packet type and unique word fields within a sub- frame header packet.

In another aspect, a method for initializing a digital transmission link is described, the method comprising (a) receiving a request to initialize the digital transmission link, (b) prepopulating a CRC generator with a CRC value corresponding to a unique data pattern, (c) disabling the CRC generator, (d) monitoring an incoming data stream to detect the unique data pattern and (e) upon detecting the unique data pattern, enabling the CRC generator. Thereby, the digital transmission link may be an MDDI transmission link. Also, the unique data pattern may include the packet length, packet type and unique word fields of a sub-frame header packet.

In another aspect, a cycle redundancy check (CRC) generator system within a host system is described, the system comprising a CRC generator that generates a CRC value based on data to be included in a data packet to be transmitted over a digital transmission link, a CRC corrupter that corrupts a CRC value generated by the CRC generator to convey host or related system status information, an error detector that detects an error condition within a host system and provides instructions for the CRC corrupter to intentionally corrupt a CRC value. Thereby, the system may further comprise an error value generator that instructs the CRC corrupter to replace a CRC value generated by the CRC generator with a CRC error value that indicates a type of system error or status condition. Thereby, said digital transmission link may be an MDDI transmission link.

In yet another aspect, a cycle redundancy check (CRC) checker is described, the checker comprising a CRC error value detector that detects CRC error values within a CRC field of a data packet received over a digital transmission link, wherein the CRC error values identify system or related system error conditions, a cyclic redundancy check (CRC) generator that generates CRC values based on a received data stream, a CRC verifier that detects differences between a CRC value generated based on a received data stream to a CRC value that was sent within the received data stream. Thereby, the digital transmission link may be an MDDI transmission link.

In yet another aspect, a method to transmit system error information from a host system over a digital transmission link is described, the method comprising (a) detecting a host system or related system error, (b) generating a CRC value based on data to be transmitted within a packet over the digital transmission link and (c) corrupting the CRC value, wherein the corruption indicates that the host system or related system error has occurred. The method may further comprise transmitting the corrupted CRC value within a data packet over the digital transmission link. Also, said digital transmission link may be an MDDI link.

In another aspect, a method to transmit system error information from a host system over a digital transmission link is described, the system comprising (a) detecting a host system or related system error, (b) generating a CRC value based on data to be transmitted within a packet over the digital transmission link, (c) determining a CRC error value based on the type of error detected in step (a) and (d) replacing the CRC value generated in step (b) with the CRC error value generated in step (c), wherein the CRC error value indicates a specific type of error condition within the host or related system. Thereby, the CRC error value may be transmitted within a data packet over the digital transmission link. Also, the digital transmission link may be a MDDI link.

## Claims

1. A cycle redundancy check, CRC, generator system (454) within a host system, comprising:
a CRC generator (910) that generates a CRC value based on data to be included in a data packet to be transmitted over a digital transmission link;
a CRC corrupter (920) that corrupts a CRC value generated by the CRC generator to convey host or related system status information;
an error detector (930) that detects an error condition within a host system and provides instructions for the CRC corrupter to intentionally corrupt a CRC value.

2. The CRC generator system (454) of claim 1, further comprising an error value generator (940) that instructs the CRC corrupter (920) to replace a CRC value generated by the CRC generator (910) with a CRC error value that indicates a type of system error or status condition.

3. The CRC generator system (454) of claim 1, wherein said digital transmission link is an MDDI transmission link.

4. A cycle redundancy check, CRC, checker (456), comprising:
a CRC error value detector (1010) that detects CRC error values within a CRC field of a data packet received over a digital transmission link, wherein the CRC error values identify system or related system error conditions;
a CRC generator (1020) that generates CRC values based on a received data stream;
a CRC verifier (1030) that detects differences between a CRC value generated based on a received data stream to a CRC value that was sent within the received data stream.

5. The CRC checker (456) of claim 4, wherein the digital transmission link is an MDDI transmission link.

6. A method to transmit system error information from a host system over a digital transmission link, comprising:
(a) detecting (1110) a host system or related system error;
(b) generating (1120) a CRC value based on data to be transmitted within a packet over the digital transmission link; and
(c) corrupting (1130) the CRC value, wherein the corruption indicates that the host system or related system error has occurred.

7. The method of claim 6, further comprising transmitting the corrupted CRC value within a data packet over the digital transmission link.

8. The method of claim 6, wherein said digital transmission link is an MDDI link.

9. A method to transmit system error information from a host system over a digital transmission link, comprising:
(a) detecting a host system or related system error;
(b) generating a CRC value based on data to be transmitted within a packet over the digital transmission link;
(c) determining a CRC error value based on the type of error detected in step (a); and
(d) replacing the CRC value generated in step (b) with the CRC error value generated in step (c), wherein the CRC error value indicates a specific type of error condition within the host or related system.

10. The method of claim 9, wherein the CRC error value is transmitted within a data packet over the digital transmission link.

11. The method of claim 9, wherein the digital transmission link is a MDDI link.
